# EUROPEAN PATENT APPLICATION

(11) **EP 0 568 489 A1**
(43) Date of publication of application: **03.11.1993**
(21) Application number: 93650016.4
(22) Date of filing: 29.04.1993
(51) Int. Cl.: A23N 12/02

(54) **A root crop washer**

(30) Priority: 01.05.1992 IE 921356
(71) Applicant: Cross, Simon, Rathangan, County Kildare (IE)
(72) Inventor: Cross, Simon, Rathangan, County Kildare (IE)
(74) Representative: Weldon, Michael James

(57) **Abstract**

A root crop washer (1) for crops such as beet has a washing drum (20) rotating about a horizontal axis. Washing is achieved by partial immersion of the drum in water in a trough (4). Slats (26) of the drum are configured to lift water during drum rotation for improved washing effectiveness. The drum (20) is driven from drive belts (22) which are in turn driven by pulleys (23) and an overhead drive shaft (24). Thus, vibration of the drum (20) in use is absorbed to a large extent by the belts (22) and damage to bearings and drive mechanisms is minimised. A contra-rotating roller (13) provides for removal of a large proportion of stones because the roller (13) is mounted on a resiliently mounted bracket (14) which yields when a stone passes between the roller (13) and the end of the conveyor brackets (12). Throughput is governed by the extent of opening of a door (29, 57) in a simple manner.

## Description

The invention relates to a root crop washer of the type comprising a washing drum mounted for rotation about a substantially horizontal axis, drive means for rotating the drum, and means for applying water to the root crops in the drum for washing.

Such root crop washers are described in British Patent Specification No. GB-A-2252493 (Cocksedge), in Soviet Union Patent Specification Nos. SU 755264 (Kiev Des Techn Inst) and SU 436661 (Potapov) and in French Patent Specification No. FR-A-2228441 (Lagrost). Generally, the washing drum is of perforated sheet material or of slatted construction and is driven by drive rollers or pinion gears. Water is applied to the root crops in the drum using spray nozzles in what are often complex water delivery systems.

One problem with such root crop washers is that because of their complexity they are often difficult to maintain and it appears that they would not be particularly reliable considering the circumstances in which root crop washers would be used. For example, the washer may be installed in a farmyard where it is exposed to the elements and where there may be a large throughput of root crops and possibly a large number of stones and other debris loaded into the washer together with the root crops. In such circumstances, dirt in systems such as spray nozzles can cause problems. Another problem is that because of the stresses which are involved in the rotating drum, bearings and other drive elements may be damaged over periods of time.

The invention is directed towards providing a root crop washer which is of simple construction and is thereby relatively inexpensive and also reliable and easy to maintain. A related object is that drive elements be subjected to a minimum of vibration and the type of wear which causes a substantial amount of damage.

The invention is characterised in that the water application means comprises a water trough mounted beneath the washing drum for partial immersion of the drum, in use. This avoids the need for water spray systems and means that the washer may be simple and robust.

In one embodiment, the drum comprises a plurality of formations which extend in a direction having a radial component. This provides for effective water turbulence, and lifting up on exit of the formation, and helps in the tumbling action of the drum on the crop.

Preferably, the washing drum is slatted, and at least some of the slats are configured to have a portion which extends in a direction having an outwardly-directed radial component. This is a simple and efficient arrangement.

In one embodiment, the slats are bent along a longitudinal line, the slat on each side of the bend extending in a direction having a radial component. Such slats are simple to produce and are effective at achieving good water turbulence and distribution, and also a good tumbling action.

Ideally, the washer further comprises means for agitating slurry in the trough. This greatly helps in discharge of the slurry, particularly after a relatively long period of use.

Preferably, the agitating means comprises a shaft having a drive coupling and flails mounted on the shaft. This arrangement is simple and effective.

In one embodiment, the trough further comprises an auger having a drive coupling for output of slurry. An auger is particularly effective at discharging slurry.

In another embodiment, the drum is mounted on rollers, and the drive means comprises a set of pulleys mounted above the drum and drive belts, each running around a pulley and the drum. Use of drive belts helps to absorb vibrations and hence improves reliability and machine life.

Preferably, the washer has a drum outlet door, the position of which is variable to vary the output opening of the drum to vary throughput. This provides for setting of throughput and hence washing duration in a simple manner.

In a still further embodiment, the washer further comprises a chopper unit mounted beyond the drum outlet, wherein the chopper unit comprises rotatable blades and a cooperating plate, the plate being resiliently mounted to allow passage of stones without damage to the blades. This is a very useful feature, particularly in farmyards, where animal feed may be prepared using the direct washer output.

The invention will be more clearly understood from the following description of some preferred embodiments thereof, given by way of example only with reference to the accompanying drawings in which:-
Fig. 1 is a partly cut away perspective view of a root crop washer of the invention;
Fig. 2 is a side view of the washer;
Fig. 3 is a diagrammatic side view showing a portion of the input section of the washer in more detail;
Fig. 4a is a diagrammatic cross-sectional front view showing the washer in more detail;
Fig. 4b is a detailed front view showing a portion of the side of the washing drum;
Fig. 4c is a diagrammatic view showing a spiral guide within the drum;
Fig. 5 is a diagrammatic front view showing the outlet of the washing drum;
Fig. 6 is a side view showing a draw bar for the washer in more detail;
Fig. 7 is a diagrammatic side view showing operation of a chopper of the washer;
Fig. 8 is a perspective view showing an alternative construction of washer of the invention; and
Fig. 9 is a diagrammatic cross-sectional front view showing operation of the washer of Fig. 8 in more detail.

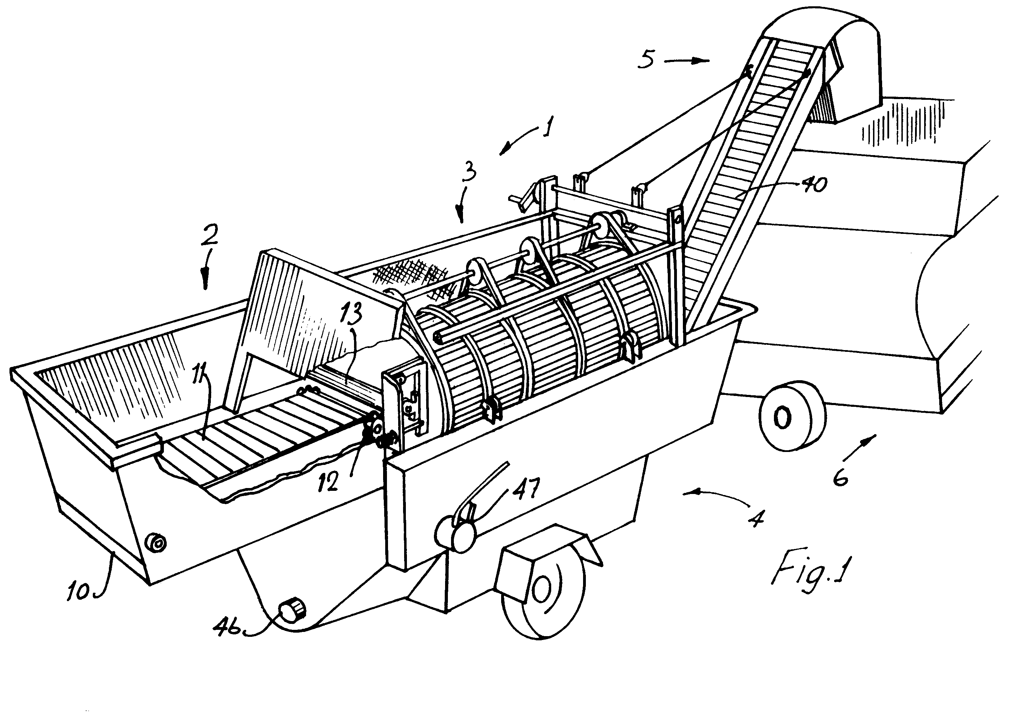

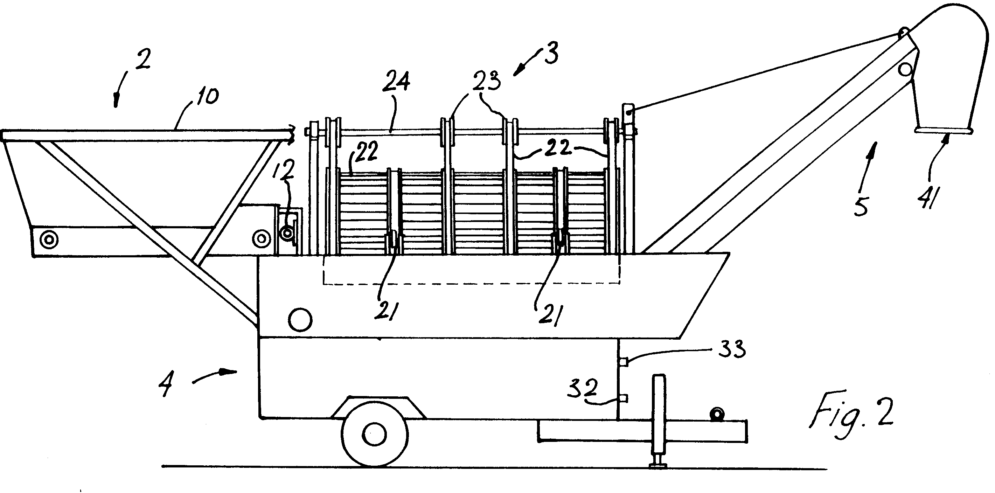

Referring to the drawings, and initially to Figs. 1 and 2, a root crop washer of the invention, indicated generally by the reference numeral 1 is shown. Briefly, the washer 1 comprises an input section 2 into which root crops such as beet are loaded for washing. There is a washing section 3 which is fed from the input section 2 and which washes the beet. A sump or trough 4 below the washing section 3 holds washing water for washing of the root crops. Finally, there is an output section 5 for delivery of the washed crops and in this embodiment for both output and chopping of the washed crops and delivery into a loader 6. The loader 6 does not form part of the invention.

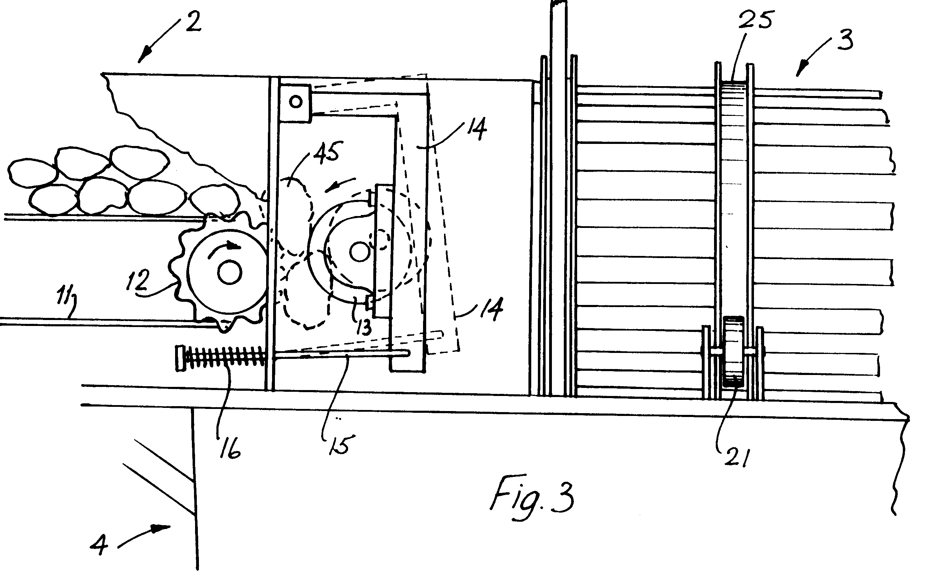

The washer 1 is now described in more detail with reference to Figs. 1 to 7 inclusive. The input section 2 comprises an input hopper 10 which is of rectangular shape in plan view, below which there is a cleaning conveyor 11. The cleaning conveyor 11 comprises transverse, spaced-apart bars which allow debris to fall through and onto the ground or a container beneath the hopper 10. The conveyor 11 is driven by a front drive sprocket 12, beyond which there is a contra-rotating stone separation roller 13. Referring in particular to Fig. 3, the stone separation roller 13 is mounted on an L-shaped pivotally mounted bracket 14. The free end of the bracket 14 is connected to the frame of the washer 1 by a rod 15 which is biased by a coil spring 16. Operation of this arrangement is described below.

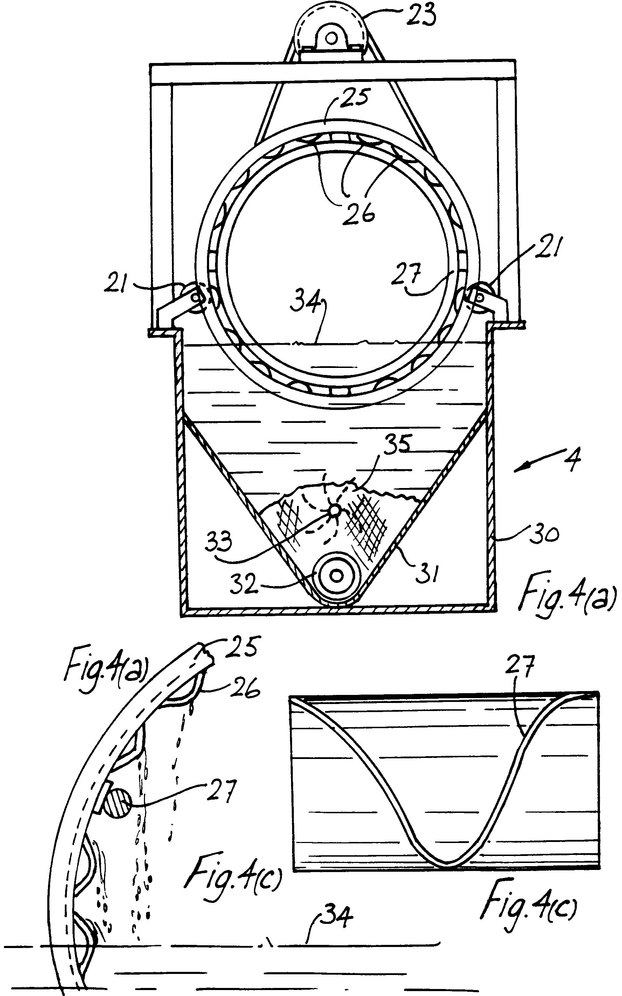

The washing section 3 comprises a slatted drum 20 which is mounted on two opposed pairs of rollers 21 which are mounted on the frame of the washer 1. The drum 20 is driven by four drive belts 22 which run around the drum 20 in rails 25, and around drive pulleys 23 mounted on an upper drive shaft 24. The drive shaft 24 is hydraulically driven from an hydraulic drive unit, not shown. Referring in particular to Figs. 4a, 4b and 4c, the drum 20 comprises slats 26 which are formed from flat steel bars bent in the middle so that there are two sides which are splayed apart. The slats 26 are bent in such a way that each side of the longitudinal bend line extends at 30° to a tangent line and at 60° to a radial line (being splayed at 120°). Thus, a relatively smooth corner which helps to tumble the root crop and yet does not damage it faces inwardly. The construction of slats 26 also allows water to be drawn up from the trough for thorough washing, as described below. A plastics tube spiral guide 27 is mounted internally in the drum 20. The manner in which it is mounted is shown in Figs. 4b and 4c. This is used for urging of the beet or other root crop towards the outlet end of the drum 20.

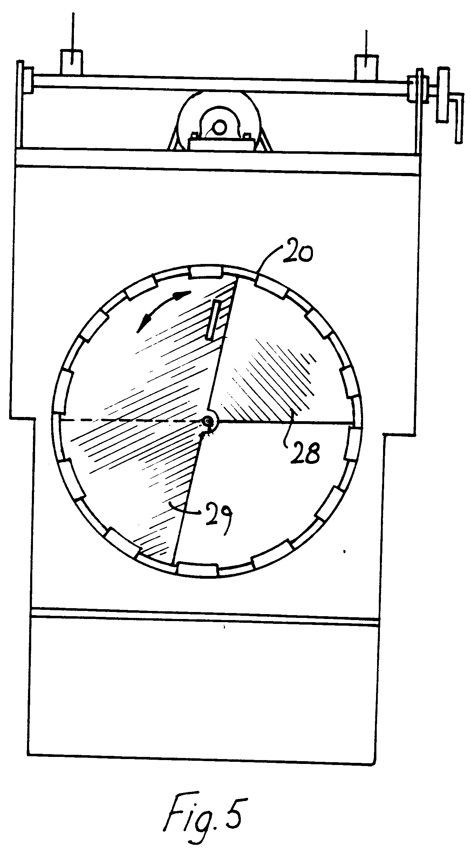

Referring now to Fig. 5, the outlet of the drum 20 is shown and this comprises a semi-circular end plate 28, which leaves a semi-circular opening, all or a portion of which may be closed off by a semi-circular rotatable door 29. The extent of opening of the door 29 governs the speed of throughput of the beet and accordingly the thoroughness of the washing operation.

As best shown in Fig. 4a, the trough 4 comprises an outer casing 30 and an inner wall 31 which extends downwardly and inwardly on each side so that solids fall downwardly in the water to a central longitudinal lower part of the trough. The washing water is indicated by the numeral 34 and as shown in Fig. 4a, the trough is mounted so that almost all of the lower half of the drum 20 is immersed in the water.

For outputting of the dirty washing water or slurry, the trough 4 comprises an auger 32 having a coupling for connection to the power take off unit of a tractor. Mounted above the auger 32 there is a longitudinal shaft 33 carrying pieces of chain 35 along its length which act as flails while the shaft 33 is rotated. Again, rotation is via a coupling to the power take off unit of a shaft at the front of the washer 1.

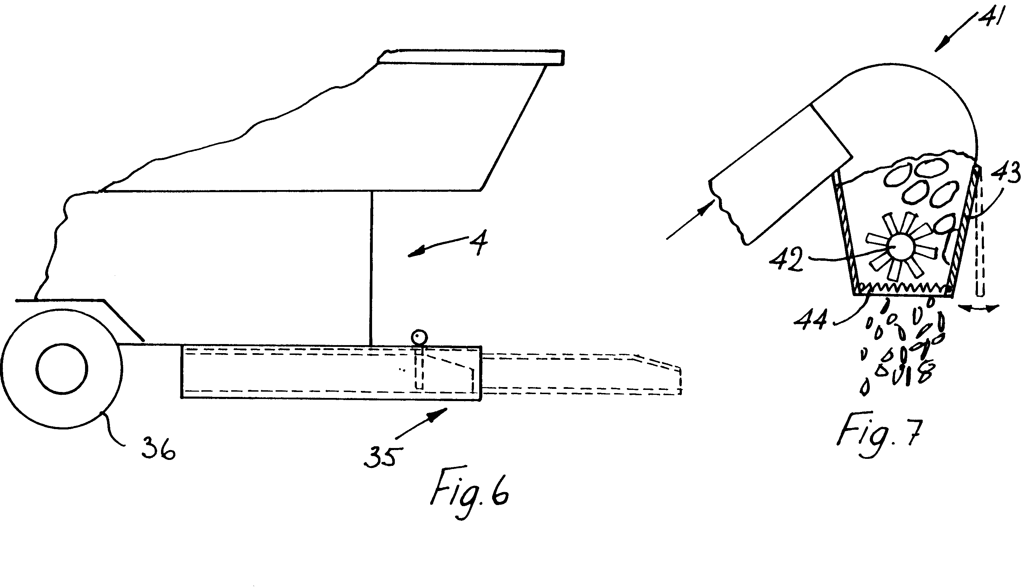

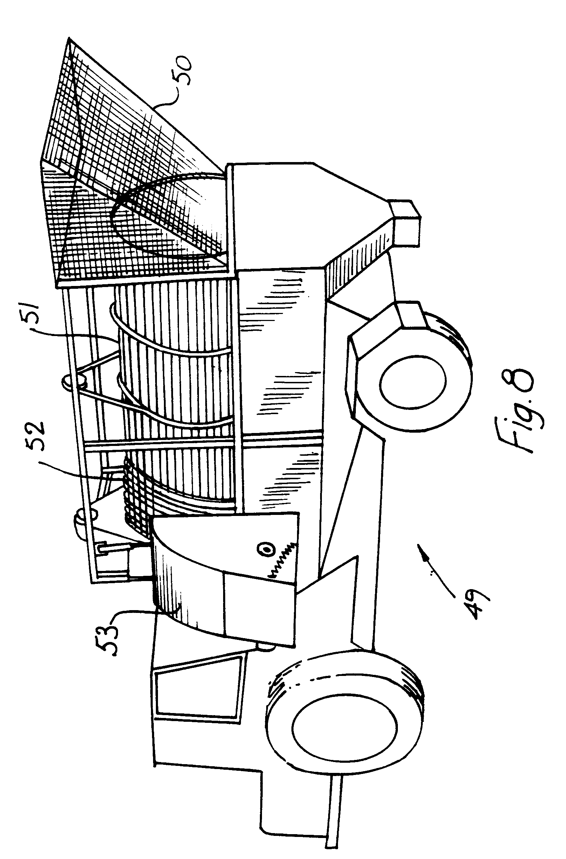

As shown in Fig. 6, the front lower end of the housing 30 holds a telescopic draw bar 36 which is very convenient in that it allows the washer to be as compact as possible when it is not being moved. The trough 4 is wheel-mounted on wheels 36.

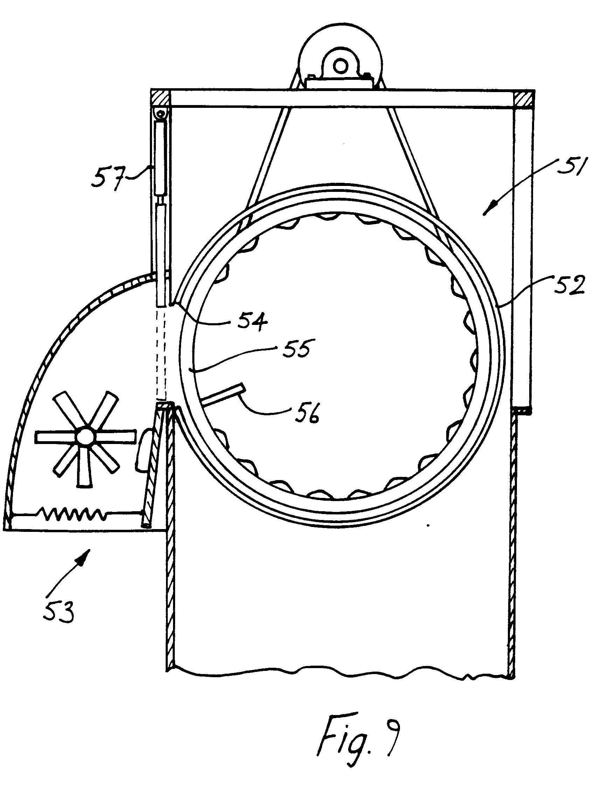

The output section 5 of the washer 1 comprises an output conveyer 40 which extends forwardly and upwardly to a chopper unit 41. The chopper unit 41 is shown in most detail in Fig. 7 and it comprises a set of chopper blades 42 mounted on a drive shaft for chopping of the beet against a spring-loaded plate 43 which is urged inwardly towards the chopper blades 42 by a spring 44. In normal operation, the plate 43 does not move outwardly to the position shown by interrupted lines, however, when a stone passes through, it does move outwardly and prevents damage to the blades 42.

In operation, beet, turnips or any other root crop is loaded by the front loader of a tractor or any other suitable device into the hopper 10. The hydraulic control mechanism, not shown, is operated to activate the hydraulic motor driving the drive sprocket 12 of the conveyor 11. A certain amount of debris (including small stones) generally falls through the bars of the conveyor 11 onto a container mounted below the hopper 10 or onto the ground. Any stones which are on the conveyor 11 and which reach the end of the conveyor generally fall down in the gap between the stone separation roller 13 and the front end of the conveyor 11. This is because the surface of the roller 13 is quite slippery and objects which have the density and size and texture of root crops such as beet are generally pushed over the roller 13 although it is rotating in the opposite direction to the sprocket 12. However, stones, because they are harder and have a texture which would cause them to slip on the conveyor 11 generally slip in the gap between the sprocket 12 and the roller 13 because they urge the bracket 14 to rotate in the anti-clockwise direction against the bias of the spring 16. Generally, because the root crop such as beet is not as hard as stones, the spring 16 holds the roller 13 in position and helps the beet to pass over the roller 13. A stone 45 is shown passing in the gap between the sprocket 12 and the roller 13 in Fig. 3. It has been found that this is a particularly simple and convenient way of separating stones from the beet before it is delivered into the washing drum 20.

The washing drum 20 is rotated by the drive belts 22 and is supported and guided by the rollers 21. Because the drum is driven by belts which are in turn driven by a drive pulley mounted above the drum, vibration of the drum in use does not cause damage to bearings because shocks are largely absorbed by the belts 22. Further, because the bearings for the drive shaft 24 are mounted well above the drum 20, they are less likely to be.damaged by stones or other debris passing through the washer 1. The manner in which the drum 20 is supported on the rollers 21 and by which it is driven by the belts 22 is an extremely important aspect of the invention as it provides for reliability and robustness in operation.

As the drum 20 rotates, the beet comes in contact with the washing water 34 in the trough 4 and the tumbling action of the beet in the drum helps to wash the beet. Effectiveness of the washing operation is greatly improved by the construction of slats 26. Because of the angle at which they are orientated, they tend to draw water up as they exit the water 34 and this has a spraying action on the beet in the drum. This greatly improves washing effectiveness. Further, the V-shape of the slat surface as viewed from inside the drum helps in the tumbling action, which is much more effective than would be the case if the slats did not have a radially-directed component.

The operator of the washer 1 may easily set the extent of washing to be carried out on the beet depending on how dirty the beet or other root crop is. This is set by adjusting the position of the rotatable door 29 to the desired position. For example, if the door 29 is almost completely closed very thorough washing occurs and the output of the beet to the output section 5 is very slow. However, for lighter washing, the door 29 may be completely opened or almost completely opened for a faster throughput and less thorough washing where the root crop is cleaner. If will be appreciated that this is an extremely simple and effective way of controlling the manner in which washing occurs, depending on the circumstances.

Referring now to Fig. 7, the manner in which the washed beet is chopped is shown in detail. Any stones which have not been removed at this stage simply cause the backing plate 43 to be urged outwardly against the bias of the spring 44 so that damage is not caused to the blades 42. This is a very important aspect of the invention as it helps to ensure reliability of the chopper unit 41. It will also be appreciated that this construction to avoid damage to the chopper blades is extremely simple and reliable.

After periods of time when there has been a certain amount of washing, generally a large amount of debris gathers in the bottom of the trough 4 and if this is left for a significant length of time it may become quite compacted. To provide for easier removal of the sludge, the power take off unit of a tractor is initially connected to the coupling of the shaft 33 which rotates the flails 35 and agitates the sludge so that the particles are suspended more uniformly in the water 34. Immediately after this operation, the power take off unit of the tractor is connected to the coupling of the auger 32 and this drives the sludge out of the trough 4 at a rear opening, not shown. In this embodiment there are two openings, one in the rear of the trough 4 and shown by the numeral 46 in Fig. 1 for connection to a vacuum unit. The other opening is in the side and is indicated by the numeral 47 in Fig. 1 for delivery out into a field as the washer is being pulled. A stone trap opening is mounted in the bottom wall of the trough 4 to allow stones to drop out.

All of the driven parts of the washer 1, with the exception of the flail shaft 33 and the auger 32 are driven by an hydraulic control unit, not shown, which drives the various hydraulic motors. It will be appreciated that any other suitable type of drive may be used instead, however.

Referring now to Figs. 8 and 9, an alternative construction of washer of the invention is shown, and is indicated generally by the reference numeral 49. The washer 49 is of a smaller and more mobile construction and instead of a conveyor at its input, it comprises an input hopper 50 formed from a wire mesh. As seen in side view, a rectangular section of the slats 26 is missing at the front end of the drum 51. At this section of the drum 51, a barrier mesh 52 surrounds the drum except at an opening next to a side-mounted chopper unit 53. This is best shown in Fig. 9. As the drum 51 rotates, the opening, indicated by the numeral 55 rotates around but beet cannot exit through the opening because of the barrier 52. This is with the exception of the inlet to the chopper unit 53 at which the beet exits under centrifugal force and is guided in the exit motion by a chute 56 mounted internally in the drum 51. The construction of the chopper unit 53 is in principle similar to that of the chopper unit 41 and requires no further description. However, in this embodiment there is an hydraulically driven shutter 57 which controls the degree of output of beet and thus, the thoroughness of the washing in a manner similar to the operation of the door 29 in the washer 1.

It will be appreciated that the invention provides a washer which is extremely simple in construction, primarily because there is no need for water spray nozzles and associated equipment. Good reliability is achieved for this reason, and also because of the manner in which the drum is driven and by which various operations such as stone removal are carried out. Simplicity and reliability is an extremely important aspect of the invention as the washer would generally be used on farms where the extent of engineering expertise readily available is limited and reliability is extremely important.

## Claims

1. A root crop washer (1,49) comprising a washing drum (20) mounted for rotation about a substantially horizontal axis, drive means (22,23) for rotating the drum, and means for applying water to root crops in the drum for washing, characterised in that,
the water application means comprises a water trough (4) mounted beneath the washing drum for partial immersion of the drum, in use.

2. A root crop washer as claimed in claim 1, wherein the drum (20) comprises a plurality of formations (26) which extend in a direction having a radial component.

3. A root crop washer as claimed in claim 2, wherein the washing drum is slatted, and at least some of the slats (26) are configured to have a portion which extends in a direction having an outwardly-directed radial component.

4. A root crop washer as claimed in claim 3, wherein the slats (26) are bent along a longitudinal line, the slat on each side of the bend extending in a direction having a radial component.

5. A root crop washer as claimed in any preceding claim, further comprising means (33) for agitating slurry in the trough.

6. A root crop washer as claimed in claim 5, wherein the agitating means comprises a shaft (33) having a drive coupling and flails (35) mounted on the shaft.

7. A root crop washer as claimed in any preceding claim, wherein the trough further comprises an auger (32) having a drive coupling for output of slurry.

8. As root crop washer as claimed in any preceding claim wherein the drum is mounted on rollers (21), and the drive means comprises a set of pulleys (23) mounted above the drum (20) and drive belts (22), each running around a pulley and the drum.

9. A root crop washer as claimed in any preceding claim, further comprising a drum outlet door (29), the position of which is variable to vary the output opening of the drum to vary throughput.

10. A root crop washer as claimed in any preceding claim, wherein the washer further comprises a chopper unit (41) mounted beyond the drum outlet, wherein the chopper unit comprises rotatable blades (42) and a cooperating plate (43), the plate being resiliently mounted (44) to allow passage of stones without damage to the blades.
